# EUROPEAN PATENT SPECIFICATION

(11) **EP 2 124 192 B1**
(45) Date of publication and mention of the grant of the patent: **17.04.2013**
(21) Application number: 09006531.9
(22) Date of filing: 14.05.2009
(51) Int. Cl.: G06T 7/00

(54) **Method for the analysis of tissue sections**
Verfahren zur Analyse von Gewebeschnitten
Procédé pour l'analyse de sections de tissus

(30) Priority: 14.05.2008 DE 102008023438
(43) Date of publication of application: 25.11.2009
(73) Proprietor: Bruker Daltonik GmbH, 28359 Bremen (DE)
(72) Inventor: Deininger, Sören-Oliver, 04129 Leipzig (DE); Walch, Axel, 85598 Baldham (DE)
(74) Representative: Kohler Schmid Möbus

(56) References cited:
- US-A1- 2005 243 412
- AXEL WALCH ET AL: "MALDI imaging mass spectrometry for direct tissue analysis: a new frontier for molecular histology" HISTOCHEMISTRY AND CELL BIOLOGY, SPRINGER, BERLIN, DE, vol. 130, no. 3, 11 July 2008 (2008-07-11), pages 421-434, XP019629877 ISSN: 1432-119X
- DALE S. CORNETT ET AL.: "A Novel Histology-directed Strategy for MALDI-MS Tissue Profiling That Improves Throughput and Cellular Specificity in Human Breast Cancer" MOLECULAR & CELLULAR PROTEOMICS, vol. 5, 18 July 2006 (2006-07-18), pages 1975-1983, XP002548366 The American Society for Biochemistry and Molecular Biology, Inc.
- PUOLITAIVAL S M ET AL: "Solvent-Free Matrix Dry-Coating for MALDI Imaging of Phospholipids" 6 March 2008 (2008-03-06), JOURNAL OF THE AMERICAN SOCIETY FOR MASS SPECTROMETRY, ELSEVIER SCIENCE INC, US, PAGE(S) 882 - 886 , XP022671100 ISSN: 1044-0305 * abstract, Fig. 4, page 885 *
- CRECELIUS A C ET AL: "Three-Dimensional Visualization of Protein Expression in Mouse Brain Structures Using Imaging Mass Spectrometry" 1 July 2005 (2005-07-01), JOURNAL OF THE AMERICAN SOCIETY FOR MASS SPECTROMETRY, ELSEVIER SCIENCE INC, US, PAGE(S) 1093 - 1099 , XP025302845 ISSN: 1044-0305 [retrieved on 2005-07-01] * abstract, Figs. 1-5, pages 1096-1097 *
- FUCHSBERGER C ET AL: "IMAGING OF PROSTATE TISSUE SECTIONS BY MALDI PROTEIN MASS SPECTROMETRY TISVIS, A TOOL FOR THE VISUAL DATA PROCESSING" 1 April 2008 (2008-04-01), JOURNAL OF UROLOGY, LIPPINCOTT WILLIAMS & WILKINS, BALTIMORE, MD, US, PAGE(S) 389 - 390 , XP022657326 ISSN: 0022-5347 [retrieved on 2008-04-01] * Fig. 1c, page 389 *
- CHAURAND P ET AL: "Integrating histology and imaging mass spectrometry" ANALYTICAL CHEMISTRY, AMERICAN CHEMICAL SOCIETY. COLUMBUS, US, vol. 76, no. 4, 9 January 2004 (2004-01-09), pages 1145-1155, XP002398608 ISSN: 0003-2700
- KRISTINA SCHWAMBORN ET AL.: "Identifying prostate carcinoma by MALDI-Imaging" INTERNATIONAL JOURNAL OF MOLECULAR MEDICINE, vol. 20, no. 2, 2007, pages 155-159, XP002548367
- E. ROMERO, F. GÓMEZ AND M. IREGUI: "Virtual Microscopy in Medical Images: a Survey" MODERN RESEARCH AND EDUCATIONAL TOPICS IN MICROSCOPY, vol. 2, 2007, pages 996-1006, XP002548368 FORMATEX ISBN: 978-84-611-9420-9

## Description

The present invention relates to a method for the histologic classification of tissue sections.

### Prior Art

Histology is the study of human, animal and plant tissues, in particular their structure and function. Histologic classification is generally carried out on a stained tissue section a few micrometers thick and concerns the tissue types present, tissue differentiation, bacterial and parasitic pathogens in the tissue, disease statuses of the tissue, and content of foreign matter like pesticides or drugs and their metabolites. The classification can be limited to one or more subareas of a tissue section, or can even apply to only one or more individual cells. The disease statuses of human tissue concern inflammatory disorders, metabolic diseases and the detection of tumors, especially differentiation between benign and malignant forms of tumors.

In histology, tissue sections are produced in the following steps:
(a) the tissue is stabilized by chemical fixation or freezing
(b) a section between 2 and 10 micrometers thick is cut with a microtome
(c) the tissue section is stained

Tissue stabilization means that the tissue structures, the cells of the tissue itself and even intracellular structures (e.g. cell nuclei, endoplasmic reticulum, mitochondria) remain preserved in the tissue section.

The structures of the tissue section are imaged or scanned by routine histologic techniques with the aid of light-optical microscopes and scanners. A light-optical image of the tissue section can have a spatial resolution of about 250 nanometers, which means that structures of the corresponding size are spatially resolved. With electron-optical imaging, or more recent optical fluorescence methods such as STED microscopy (STED = Stimulated Emission Depletion), the spatial resolution of the optical image can be increased further, i.e. even smaller structures can be spatially resolved.

Staining the tissue section increases the contrast in the optical image. A wide variety of histologic stains are available winch differ in their affinity to certain tissue and cell structures and selectively visualize these structures in the optical image. Hematoxylin and eosin (H&E) staining is most commonly used in routine and general investigations. Specific staining techniques include immunostainings, where the distribution of proteins in tissue sections and in the cells of the tissue section is visualized by virtue of the fact that specific antibodies bind affinitively to certain proteins. In addition to antigen-antibody bonds, so-called in-situ hybridization methods with specific DNA probes (DNA = deoxyribonucleic acid) are also used.

Staining reveals structures of the tissue section or distributions of the stain in the tissue section. Histology is usually a morphologic diagnostic method because the histologic classification is done according to the appearance and staining properties of the tissue and cell structures. Immunostaining and in-situ hybridization are usually highly specific, so not only morphologic information but also molecular information can be derived. All information obtained from an light-optical image of a tissue section will be summarized below by the term "light-optical information".

The status of a tissue in relation to diseases, tissue differentiation, infection with pathogens, and distribution of foreign matter as compared to another, normally differentiated or healthy tissue sample can become apparent by a characteristic composition of substances. The tissue state is therefore characterized by concentration patterns of substances and thus molecular information. If the concentrations of the substances are sufficiently high, the concentration patterns can be detected by a mass spectrometric analysis. The substances can be all kinds of biological substances, e.g. proteins, nucleic acids, lipids, sugars or drugs. An unusual pattern can result when certain biological substances are underexpressed or overexpressed. Proteins, in particular, can also be present in different derivative states when they have been modified in characteristic ways, e.g. by posttranslational modifications.

Mass spectrometry with ionization of a sample by matrix-assisted laser desorption and ionization (MALDI) has been used successfully for several years for the determination of molecular masses, and for the identification and structural characterization of biological substances, particularly proteins and peptides.

Characteristic concentration patterns can be determined by homogenizing a tissue sample in the familiar way. The substances contained therein are prepared and applied to a sample support together with a solution of a matrix substance. The solvent then evaporates and the matrix substance crystallizes; the biological substances in the matrix crystals crystallize at the same time in the form of widely spaced individual molecules. Bombarding a homogenized sample thus prepared with short laser pulses of sufficient energy causes the matrix substance to explosively vaporize and the biological substances to be ionized.

Imaging mass spectrometric (IMS) analysis, i.e, acquiring a mass spectrometric image, involves investigating tissue sections of the type familiar from histology instead of homogenized tissue samples. A tissue section is placed on an electrically conductive sample support. A suitable method is then employed to apply a matrix solution onto the tissue section. Once the matrix solution has dried, the sample support is introduced into a mass spectrometer. The Caprioli raster scan method (US 5,808,300 A) or stigmatic imaging of a small region of the tissue (Luxembourg et al., Analytical Chemistry, 76(18), 2004, 5339-5344: "High-Spatial Resolution Mass Spectrometric Imaging of Peptide and Protein Distributions on a Surface") can be used for the subsequent imaging mass spectrometric analysis. Both techniques produce a mass spectrometric image of the tissue section, i.e, the molecular information in the mass spectra is spatially resolved.

Patent specification DE 10 2006 019 530 B4 elucidates different methods of preparing tissue sections for imaging mass spectrometric analysis. The matrix solution or a recrystallization solution can be applied to the tissue section by pneumatic spraying, nebulizing by vibration or by the nanospotting of droplets, for example. It is no trivial task to apply the matrix solution because (a) lateral smearing of the biological substances must be avoided, (b) the biological substances must preferably be extracted from the tissue section and incorporated into the crystals of the matrix layer, and (c) a favorable ratio of biologically relevant substances to impurities must be achieved. The process of applying the matrix substance to the tissue section, and the effect this has on the tissue section, means that mass spectrometric images of tissue sections are currently limited to a spatial resolution of between twenty and two hundred micrometers. It is therefore not possible to spatially resolve structures smaller than twenty micrometers. This spatial resolution is more than an order of magnitude worse than that of the optical images used in conventional histology.

Three different methods are known for coupling histology based on optical images with images based on mass spectrometry (Bruker Application Note #MT-89: "Advances in Molecular Histology with the MALDI Molecular Imager"). Firstly, it is possible to take an optical image of one tissue section and a separate mass spectrometric image of an adjacent tissue section from the same tissue sample. The mechanical tolerances for the production of two tissue sections mean that two adjacent tissue sections are generally not sufficiently congruent, so spatial correlation of the two images is only possible to a very limited extent. The second method is to first acquire an optical image and then a mass spectrometric image of a single tissue section. In this case, staining the tissue section must not influence the extraction of the biological substances and their subsequent ionization. Since most histologic stains do not fulfill these requirements and reduce the information content of the mass spectra too much, this method is seldom used. Thirdly, a mass spectrometric image can be acquired first and then an optical image. The matrix layer applied to the tissue section is removed again after the mass spectrometric image has been acquired. Then the tissue section is subjected to routine histologic staining, and an optical image is taken.

The types of tissue section images thus obtained are usually superimposed in a graphical representation, in which the spatially resolved mass spectra are often reduced to individual selected masses or to an assignment to certain classes, based on statistical analysis. The optical image serves only as a means of orientation in the mass spectrometric image, which has a lower spatial resolution, as has been described. From the publication by Schwamborn et al. (International Journal of Molecular Medicine, 20,155 - 157, 2007: "Identifying prostate carcinoma by MALDI-Imaging") it is known that morphologic information from an optical image of a tissue section is used to classify spatially resolved mass spectra by means of a supervised learning method, and to find disease-specific patterns in the mass spectra.

Every type of classification is subject to error, and that includes histologic classification of tissue sections. The quality of a classification is defined by the statistical parameters describing these errors. The statistical parameters include the sensitivity (true positive rate), the specificity (true negative rate), the false positive rate (false alarm) and the false negative rate. There is also the probability that a tissue section with a positive diagnosis actually has the corresponding disease status (relevance) or that a tissue section with a negative diagnosis really does not have the disease status. Furthermore, the true classification rate and the false classification rate can be given.

### Summary of the Invention

The invention is defined by the appended claims. It comprises the acquisition of both a mass spectrometric image and a light-optical image of the same tissue section, the optical image having a higher spatial resolution than the mass spectrometric image, and combining, for a classification, the optical information on the structures of a subarea of the tissue section with the mass spectrometric information on the subarea, whereby the structures are not being spatially resolved in the mass spectrometric image. The subarea here can consist of only a single cell, for example. The designation "structure" concerns morphologic and dye coloring pattern.

The light-optical image preferably has a spatial resolution that is ten to two hundred times higher than that of the mass spectrometric image. At present, the best spatial resolution of the mass spectrometric image amounts to twenty micrometers, while that of the optical image typically is less than two micrometers. In the future, a mass spectrometric image resolution often micrometers way be achieved.

Although it is known from the Prior Art that an optical image and a mass spectrometric image of a single tissue section are acquired, the optical images have until now often only been used as a means of orientation in the mass spectrometric image or for assigning the mass spectrometric information to tissue structures. An exception is given by Schwamborn et al., Int Journal of Molecular Medicine, 20: 155-159, 2007. It is, indeed, possible to acquire a mass spectrometric image and an light-optical image of a single tissue section with, surprisingly, undiminished spatial resolution of the optical image with respect to conventional histologic requirements. This also applies to the invention, where the imaging mass spectrometric analysis (i.e. acquiring the mass spectrometric image) is done before the optical image is acquired. Thus, two independent valuable sources of information are available, with no restrictions in quality. Both can be used independently to perform a histologic classification, but when they are combined according to the invention, they drastically improve the quality of the histologic classification. In contrast to the Prior Art, both types of information are therefore used for the histologic classification; in some cases, a classification of sufficient quality would not be possible without this combination.

The optical information relevant for a histologic classification is derived from the light-optical image in the familiar way and concerns the shape and arrangement of cells or the shape of intracellular structures (such as cell nuclei, endoplasmic reticulum, mitochondria), in each case taking into consideration the staining used for the tissue section. The information may be derived visually or by computerized image evaluation.

In order to visually obtain the optical information on the structures in a subarea of the tissue section, a section of the optical image which contains the whole subarea or part of it, is enlarged in the preferred way. A particularly preferable way is to enlarge several sections of the optical image which all contain the whole subarea or part of it, either simultaneously or consecutively; the location and/or enlargement of the sections are different in each case. One way of obtaining an enlarged representation of a section of the optical image is to take a second optical image of the desired section of the first image. Another option is to compute an enlarged visual representation of the section from the optical image of the tissue section already taken. In this preferred case, the term "virtual microscope" is used because the enlargement of a section, and similarly the return to a section with lower enlargement, is done purely by computation without physically taking a new optical image.

The lower spatial resolution of the mass spectrometric image is balanced by the high molecular information content of the mass spectra. The mass spectrometric information can be a local mass spectrum assigned to the subarea and its surroundings, or differences between the local mass spectrum and mass spectra that are assigned to other subareas of the tissue section or to mass spectra from other sources of data (e.g. databases). Moreover, mass spectrometric information preferably may consist in the local mass spectrum being assigned to one or several classes by means of a statistical analysis. To this end, the local mass spectrum is generally compared with mass spectra from other subareas of the tissue section and/or with mass spectra from other data sources. Suitable statistical analyses are, for example: support vector machines (SVM), genetic algorithms for cluster analysis, principal component analysis (PCA), decision trees, nearest neighbor classification (k-nearest neighbor (k-NN)) or neuronal networks (e.g.: linear vector quantization (LVQ), neural gas (NG), self-organizing map (SOM)) The classes correspond to those of histologic classification and relate to the tissue types that occur in the tissue section, tissue differentiation, pathogens and disease statuses, and presence of foreign matter.

So-called peak lists, or reduced mass spectra, are also considered as mass spectra in this case. A peak list is a list of value pairs which are extracted from a measured raw spectrum and which each contain the mass and the signal strength of a signal peak in the measured raw spectrum. A reduced mass spectrum contains only the signals of one or more mass windows, which are usually specified by the user.

In order to histologically classify a tissue section with sufficient quality, it may be necessary to combine the relevant light-optical and mass spectrometric information from several subareas of the tissue section. The histologic classification can be limited to one region or several regions of the tissue section and can relate in particular to single cells or several single cells.

### Description of the Figures

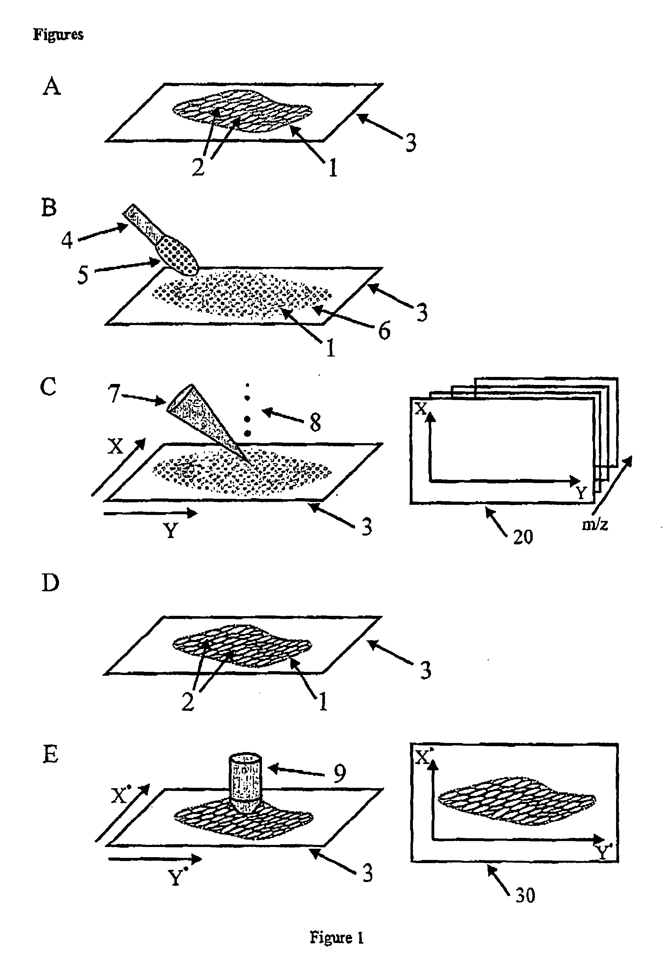

**Figure 1****,** comprising steps A to E, shows that first a mass spectrometric image (20) and then an light-optical image (30) of a tissue section (1) is acquired; the spatial resolution of the mass spectrometric image (20) is about 30 micrometers, and the spatial resolution of the optical image (30) about half a micrometer.

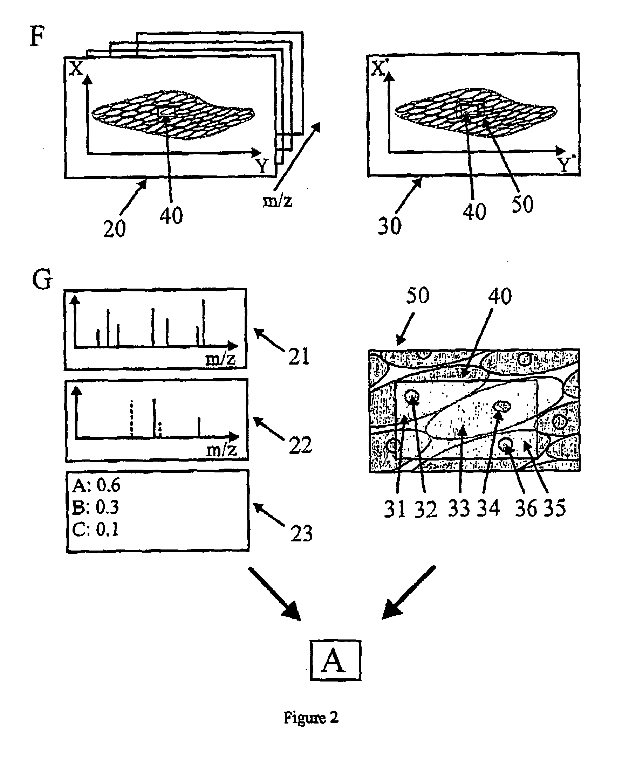

**Figure 2****,** comprising steps F and G, shows that a subarea (40) of the tissue section (1) is selected; a section (50) of the optical image (30) containing the subarea (40) is enlarged and optical information on cells (31, 33, 35) in the subarea (40) is combined with mass spectrometric information on the subarea (40) in order to classify the tissue section (1), resulting in class "A". The subarea (40) here is not spatially resolved in the mass spectrometric image (20).

### Preferred Embodiments

**Figures 1** **and** **2** comprise steps A to G and show a preferred example embodiment of the method according to the invention for the histologic classification of a tissue section.

In **Step A,** a tissue section (1) some ten micrometers thick is provided on a specimen slide (3). This involves first freezing a tissue sample to stabilize it before cutting it with a microtome.

In **Step B,** a matrix layer (6) is applied to the tissue section (1). The device (4) is described in the patent specification DE 10 2006 019 530 B4 and uses vibrations to produce a mist (5) of small droplets from a dissolved matrix substance; these droplets deposit on the tissue section (1) and start to dry. Nebulization and subsequent partial drying of the matrix droplets on the tissue section (1) are repeated cyclically until the matrix layer (6) is in the optimum state for an imaging mass spectrometric analysis.

**Step C** involves taking a mass spectrometric image (20) of the tissue section (1) prepared in Step B. The tissue section (1) is scanned with laser pulses of a focused laser beam (7). Every pixel is irradiated at least once with a laser pulse. The ions (8) generated by the MALDI process are analyzed in a time-of-flight mass spectrometer (not shown) so that every pixel has a mass spectrum assigned to it The mass spectrometric image (20) has a mass axis (m/z) in addition to two spatial axes (X, Y), which means that a two-dimensional image is obtained for the intensities of each individual mass.

A mass spectrometer essentially separates the ions according to their mass-to-charge ratio (m/z, also termed the "charge-related mass"). A measured mass spectrum can be used to determine the charge-related mass m/z, and hence their physical mass m. Since ionization by matrix-assisted laser desorption essentially provides only singly charged ions, the term "mass" rather than "charge-related mass" will be used below for the sake of simplicity.

In imaging mass spectrometric analysis, the spatial resolution is generally limited by the preparation of the tissue section (1) and is about 30 micrometers in this particular case. The focal diameter of the laser beam (7) is correspondingly adjusted. In order to go from one pixel to the next, the specimen slide (3) is moved along the X and Y axes by a movement device (not shown).

In principle, the mass spectrometric analysis can be conducted in a wide variety of mass spectrometers. At present, it is mainly time-of-flight mass spectrometers (TOF-MS), with or without a reflector, that are used for imaging mass spectrometric analysis. However, time-of-flight mass spectrometers with orthogonal ion injection, ion traps or ion cyclotron resonance mass spectrometers, for example, can also be used.

In **Step D,** the matrix layer (6) is removed from the tissue section (1) by successive washing with methanol and acetone, for example. The exposed tissue section (1) is then stained with hematoxylin eosin according to standard histologic procedure.

In **Step E,** an optical image (30) of the tissue section (1) is taken with a high-resolution optical scanner (9), as is conventionally used in the standard histologic classification of stained tissue sections. Although the spatial resolution in the mass spectrometric image (20) is only 30 micrometers, the scanner (9) is set up so that the optical image (30) has a spatial resolution of only half a micrometer. The separation between two spatially resolved pixels in the optical image (30) is thus around sixty times smaller than in the mass spectrometric image (20). The axes of the optical image (30) are therefore labeled differently (X*, Y*). It is extremely surprising that the information content of the optical image (30) is diminished only very slightly, if at all, by the fact that the matrix layer (6) has been previously applied to the tissue section (1) and then removed again. This might be due to the fact that for the mass spectrometric image, only a relatively low amount of soluble protein molecules or other soluble molecules are extracted from the tissue section, but no non-soluble molecules essential for keeping the morphological structure are removed.

In **Step F,** a subarea (40) of the tissue section (1) is selected. The subarea (40) is in a section (50) of the optical image (30). Since both images (20, 30) stem from a single tissue section (1), they are congruent, which means that a spatial correlation between the pixels of both images (20, 30) can be easily made. The subarea (40) can be selected in either the optical image or the mass spectrometric image.

For a visual presentation, the mass spectrometric image (20) is preferably reduced so that only the signal of one single mass, or the signals of a few masses, are displayed. In the latter case, different masses can be color coded, for example. A particularly favorable type of reduced representation consists in assigning each mass spectrum to one or more classes by means of a statistical analysis and only representing the distribution of the class assignment optically (see, for instance, patent application US 2006/0063145 Al).

In **Step G,** optical information on structures in the subarea (40) is combined with mass spectrometric information of the subarea (40) in order to histologically classify the tissue section (1) at least in the subarea (40).

The optical information is obtained by enlarging the section (50) of the optical image (30). The spatial resolution in the optical image (30) is so high that the cells (31, 33, 35) in the subarea (40) and their intracellular structures, such as cell nuclei (32, 34, 36), are spatially resolved. The optical information here relates to the different staining of the cell (31) compared to the neighboring cells (33, 35) and to the different shape of their cell nucleus (32). It is also possible to enlarge several sections consecutively, with the sections having different locations and/or enlargements. The virtual microscope also makes it possible to zoom further into the subarea (40).

In the mass spectrometric image (20), no structures are spatially resolved within the subarea (40). The mass spectrometric information thus relates, on the one hand, to a local mass spectrum (21), which is assigned to the vicinity of the subarea (40). The vicinity is determined by the spatial resolution of the mass spectrometric image (20) and the location of the subarea (40) in the grid of the mass spectrometric image (20). Secondly, a difference spectrum (22) between the local mass spectrum (21) and a reference spectrum of a database is shown, where the signals that are only present in the local mass spectrum (21) are represented by solid lines and those signals that are only present in the reference spectrum are represented by broken lines. Furthermore, a statistical analysis is used to assign the local mass spectrum (21) to classes A, B and C, class A standing for a positive result, class B for a negative result and class C for a failed assignment to the classes A and B. The probabilities for a class assignment is given in diagram (23); the assignment from the mass spectrum alone is rather fuzzy.

The quality of the histologic classification is drastically improved by combining the two different information sources. The resulting class quite clearly is "A".

In order to classify the whole tissue section (1) at different locations or to further improve the quality of the classification, Steps F and G can be repeated in other subareas.

## Claims

1. Method for the histological classification of a subarea of a tissue section, comprising acquisition of a mass spectrometric image and a light-optical image of the tissue section in a first step, wherein the tissue section is prepared with a matrix substance for ionization by matrix-assisted laser desorption for acquiring the mass spectrometric image and wherein the matrix substance is removed after acquiring the mass spectrometric image and before acquiring the optical image, the light-optical image having a higher spatial resolution than the mass spectrometric image, and wherein the structures of the subarea are not spatially resolved in the mass spectrometric image, **characterized in**
**that** in a second step optical information derived from the optical image concerning structures of the subarea of the tissue section is combined with independent mass spectrometric information on the subarea derived from the mass spectrometric image to the histological classification of the subarea in order to obtain said histological classification such that its quality is improved compared to the histological classifications that would result from separately considering said independant information sources.

2. Method according to Claim 1, wherein a section of the optical image which contains the whole or a part of the subarea is enlarged in order to visually obtain the optical information on the structures in the subarea

3. Method according to Claim 2, wherein the section is enlarged by taking a second optical image.

4. Method according to Claim 2, wherein the section enlargement is computed from the optical image already taken.

5. Method according to Claim 2, wherein several sections of the optical image, which all contain the whole or a part of the subarea, are simultaneously or consecutively enlarged, with the location and/or the enlargement of the sections being different.

6. Method according to Claim 1, wherein the optical image has a spatial resolution which is at least five times higher than that of the mars spectrometric image.

7. Method according to Claim 6, wherein the mass spectrometric image has a spatial resolution of more than ten micrometers and the optical image has a spatial resolution of less than two micrometers.

8. Method according to Claim 1, wherein the subarea is a single cell.

9. Method according to Claim 1, wherein the optical information concerns intracellular structures.

10. Method according to Claim 1, wherein the mass spectrometric information consists of a local mass spectrum of the subarea.

11. Method according to Claim 1, wherein the mass spectrometric information consists of differences between a local mass spectrum of the subarea and other mass spectra of the mass spectrometric image and/or other mass spectra from additional data sources.

12. Method according to Claim 1, wherein the mass spectrometric information consists of an assignment of a local mass spectrum of the subarea to a class by a statistical analysis.

13. Method according to Claim 12, wherein the statistical analysis compares the local mass spectrum to mass spectra of other subareas of the tissue section and/or to mass spectra from other data sources.

14. Method according to Claim 1, wherein optical and mass spectrometric information from several subareas of the tissue section is combined.

15. Method according to Claim 1, wherein the tissue section is stained after the matrix substance has been removed and before the optical image is made.

## Patentansprüche

1. Verfahren zur histologischen Klassifizierung eines Teilgebiets eines Gewebeschnittes, umfassend die Aufnahme eines massenspektrometrischen Bildes und eines lichtoptischen Bildes des Gewebeschnittes in einem ersten Schritt, wobei der Gewebeschnitt mit einer Matrixsubstanz für die Ionisierung durch matrixunterstützte Laserdesorption präpariert wird, um das massenspektrometrische Bild aufzunehmen und wobei die Matrixsubstanz nach Aufnahme des massenspektrometrischen Bildes und vor Aufnahme des optischen Bildes entfernt wird, wobei das lichtoptische Bild eine höhere Ortsauflösung als das massenspektrometrische Bild hat, und wobei die Strukturen des Teilgebiets in dem massenspektrometrischen Bild nicht ortsaufgelöst sind, **dadurch gekennzeichnet, dass** in einem zweiten Schritt die optischen Informationen, die von dem optischen Bild erhalten wurden, in Bezug auf die Strukturen des Teilgebiets des Gewebeschnittes mit unabhängigen massenspektrometrischen Informationen über das Teilgebiet, die von dem massenspektrometrischen Bild erhalten wurden, zu der histologischen Klassifizierung des Teilgebiets verknüpft werden, um die histologische Klassifizierung zu erhalten, so dass ihre Qualität im Vergleich mit den histologischen Klassifizierungen, die sich aus einer separaten Betrachtung der unabhängigen Informationsquellen ergeben würden, verbessert ist.

2. Verfahren nach Anspruch 1, wobei ein Ausschnitt des optischen Bildes, das das Teilgebiet vollständig oder teilweise enthält, vergrößert dargestellt wird, um die optischen Informationen über die Strukturen in dem Teilgebiet visuell zu erhalten.

3. Verfahren nach Anspruch 2, wobei die vergrößerte Darstellung des Ausschnitts durch die Aufnahme eines zweiten optischen Bildes erzielt wird.

4. Verfahren nach Anspruch 2, wobei die vergrößerte Darstellung des Ausschnitts aus dem bereits aufgenommenen optischen Bild berechnet wird.

5. Verfahren nach Anspruch 2, wobei gleichzeitig oder nacheinander mehrere Ausschnitte des optischen Bildes, die alle das Teilgebiet vollständig oder teilweise enthalten, vergrößert dargestellt werden, wobei die Lage und/oder die Vergrößerung der Ausschnitte unterschiedlich sind.

6. Verfahren nach Anspruch 1, wobei das optische Bild eine mindestens 5 mal höhere Ortsauflösung als das massenspektrometrische Bild aufweist.

7. Verfahren nach Anspruch 6, wobei das massenspektrometrische Bild eine Ortsauflösung von mehr als zehn Mikrometer aufweist und das optische Bild eine Ortsauflösung von weniger als zwei Mikrometer aufweist.

8. Verfahren nach Anspruch 1, wobei das Teilgebiet eine einzelne Zelle ist.

9. Verfahren nach Anspruch 1, wobei die optischen Informationen intrazelluläre Strukturen betreffen.

10. Verfahren nach Anspruch 1, wobei die massenspektrometrischen Informationen aus einem lokalen Massenspektrum des Teilgebietes bestehen.

11. Verfahren nach Anspruch 1, wobei die massenspektrometrischen Informationen aus Unterschieden zwischen einem lokalen Massenspektrum des Teilgebietes und anderen Massenspektren des massenspektrometrischen Bildes und/oder anderen Massenspektren von weiteren Datenquellen bestehen.

12. Verfahren nach Anspruch 1, wobei die massenspektrometrischen Informationen aus einer Zuordnung eines lokalen Massenspektrums des Teilgebietes auf eine Klasse durch eine statistische Analyse bestehen.

13. Verfahren nach Anspruch 12, wobei das lokale Massenspektrum in der statistischen Analyse mit Massenspektren von anderen Teilgebieten des Gewebeabschnittes und/oder mit Massenspektren aus anderen Datenquellen verglichen wird.

14. Verfahren nach Anspruch 1, wobei optische und massenspektrometrische Informationen von mehreren Teilgebieten des Gewebeschnittes verknüpft werden.

15. Verfahren nach Anspruch 1, wobei der Gewebeschnitt nach dem Entfernen der Matrixsubstanz und vor der Erstellung des optischen Bildes angefärbt wird.

## Revendications

1. Procédé de classification histologique d'une sous-zone d'une section de tissu, comprenant une obtention d'une image spectrométrique de masse et d'une image optique de la section de tissu dans une première étape, où la section de tissu est préparée avec une substance matrice à des fins d'ionisation par une désorption laser assistée par matrice afin d'obtenir l'image spectrométrique de masse et où la substance matrice est retirée après obtention de l'image spectrométrique de masse et avant obtention de l'image optique, l'image optique présentant une résolution spatiale plus élevée que l'image spectrométrique de masse, et où les structures de la sous-zone ne sont pas spatialement résolues dans l'image spectrométrique de masse, **caractérisé en ce que**
dans une deuxième étape, les informations optiques obtenues à partir de l'image optique concernant des structures de la sous-zone de la section de tissu sont combinées à des informations spectrométriques de masse indépendantes sur la sous-zone obtenues à partir de l'image spectrométrique de masse par rapport à la classification histologique de la sous-zone afin d'obtenir ladite classification histologique de sorte que sa qualité est améliorée par comparaison avec les classifications histologiques qui résulteraient d'une considération séparée desdites sources d'informations indépendantes.

2. Procédé selon la revendication 1, dans lequel une section de l'image optique qui contient la totalité ou une partie de la sous-zone est agrandie afin d'obtenir visuellement les informations optiques sur les structures dans la sous-zone.

3. Procédé selon la revendication 2, dans lequel la section est agrandie en prenant une deuxième image optique.

4. Procédé selon la revendication 2, dans lequel l'agrandissement de la section est calculé à partir de l'image optique déjà prise.

5. Procédé selon la revendication 2, dans lequel plusieurs sections de l'image optique, qui contiennent toutes la totalité ou une partie de la sous-zone, sont agrandies de manière simultanée ou consécutive, l'emplacement et/ou l'agrandissement des sections étant différents.

6. Procédé selon la revendication 1, dans lequel l'image optique présente une résolution spatiale qui est au moins cinq fois supérieure à celle de l'image spectrométrique de masse.

7. Procédé selon la revendication 6, dans lequel l'image spectrométrique de masse présente une résolution spatiale de plus de dix micromètres et l'image optique présente une résolution spatiale de moins de deux micromètres.

8. Procédé selon la revendication 1, dans lequel la sous-zone est une cellule unique.

9. Procédé selon la revendication 1, dans lequel les informations optiques concernent des structures intracellulaires.

10. Procédé selon la revendication 1, dans lequel les informations spectrométriques de masse consistent en un spectre de masse local de la sous-zone.

11. Procédé selon la revendication 1, dans lequel les informations spectrométriques de masse consistent en des différences entre un spectre de masse local de la sous-zone et d'autres spectres de masse de l'image spectrométrique de masse et/ou d'autres spectres de masse provenant de sources de données supplémentaires.

12. Procédé selon la revendication 1, dans lequel les informations spectrométriques de masse consistent en une affectation d'un spectre de masse local de la sous-zone à une classe par une analyse statistique.

13. Procédé selon la revendication 12, dans lequel l'analyse statistique compare le spectre de masse local à des spectres de masse d'autres sous-zones de la section de tissu et/ou à des spectres de masse provenant d'autres sources de données.

14. Procédé selon la revendication 1, dans lequel des informations optiques et spectrométriques de masse provenant de plusieurs sous-zones de la section de tissu sont combinées.

15. Procédé selon la revendication 1, dans lequel la section de tissu est colorée après que la substance matrice a été retirée et avant que l'image optique ne soit obtenue.
